# EUROPÄISCHE PATENTANMELDUNG

(11) **EP 0 848 582 A2**
(43) Veröffentlichungstag der Anmeldung: **17.06.1998**
(21) Anmeldenummer: 97119860.1
(22) Anmeldetag: 13.11.1997
(51) Int. Cl.: H05F 3/02

(54) **Vorrichtung zur Entionisierung eines fluidtransportierenden Rohrs**

(30) Priorität: 11.12.1996 DE 19651398
(71) Anmelder: Weidenmüller, Ralf, 79576 Weil am Rhein (DE)
(72) Erfinder: Weidenmüller, Ralf, 79576 Weil am Rhein (DE)
(74) Vertreter: Rapp, Bertram, Dr.

(57) **Zusammenfassung**

Die Erfindung betrifft eine Vorrichtung zur Entionisierung eines fluidtransportierenden Rohrs (1) aus elektrisch isolierendem Material. Bekannte derartige Vorrichtungen weisen den Nachteil von Funkenüberschlägen auf.

Die Aufgabe, eine Vorrichtung so weiterzubilden, daß Funkenüberschläge vermieden werden, wird gelöst durch leitfähige Stifte (4), welche in Bohrungen (3) in der Wandung (2) des Rohrs (1) angeordnet und über einen Erdungsleiter (5) geerdet sind.

## Beschreibung

Die Erfindung betrifft eine Vorrichtung zur Entionisierung eines fluidtransportierenden Rohrs nach dem Oberbegriff des Anspruchs 1. Unter Fluid ist hierbei ein Gas oder eine Flüssigkeit zu verstehen.

In vielen Industriezweigen finden Rohre und Rohrsysteme Verwendung, durch welche ein Gas oder eine Flüssigkeit transportiert wird. Ein Gastransport durch ein Rohrsystem erfolgt beispielsweise in Absauganlagen, Kühlanlagen oder Gasversorgungsanlagen. Entsprechend erfolgt ein Transport von Flüssigkeiten in Kühlanlagen, Absauganlagen oder Versorgungseinrichtungen. Daneben gibt es eine Vielzahl weiterer Anwendungsfälle durch derartige Rohrsysteme.

Bei den bekannten Vorrichtungen besteht das Rohrsystem meist aus Metall, wobei die Rohre entweder runden oder rechteckigen Querschnitt aufweisen und aus Metallblech gefertigt sind. Diese Rohrsysteme haben den Vorteil, daß die bei schneller Durchströmung mit Gas oder Flüssigkeit zwangsläufig sich bildenden Ionen über das elektrisch leitfähige Metall abgeführt werden können. In der Regel sind diese Rohrsysteme geerdet. Auf der anderen Seite sind derartige Metallrohrsysteme aufgrund des verwendeten Rohstoffes, der arbeitsintensiven Herstellung und der mühsamen Montage verhältnismäßig teuer.

Es findet daher zunehmend Rohrsysteme aus Kunststoff Verwendung. Diese sind billig in der Herstellung und in der Montage, weisen aber den Nachteil auf, daß die sich bei schneller Durchströmung bildenden Ionen nicht abgeführt werden können, sondern sich an der Innenseite des Rohrs ansammeln und eine erhebliche elektrische Ladung aufbauen, welche schließlich zu Funkenentladungen führt. Dies ist zum einen störend und in vielen Industriezweigen auch außerordentlich gefährlich, insbesondere wenn mit brennbaren Flüssigkeiten oder explosiven Gasen gearbeitet wird oder auf elektromagnetische Verträglichkeit geachtet werden muß.

Es besteht daher die Aufgabe, eine Vorrichtung zur Entionisierung von fluidtransportierenden Rohren aus elektrisch isolierendem Material so weiterzubilden, daß keine spontanen elektrischen Entladungen mehr auftreten.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert. Diese zeigen:
- **Fig. 1**: eine perspektivische Darstellung einer Anordnung aus drei Rohrstücken, und
- **Fig. 2**: einen Längsschnitt durch eines der in Figur 1 dargstellten, geraden Rohrstücke

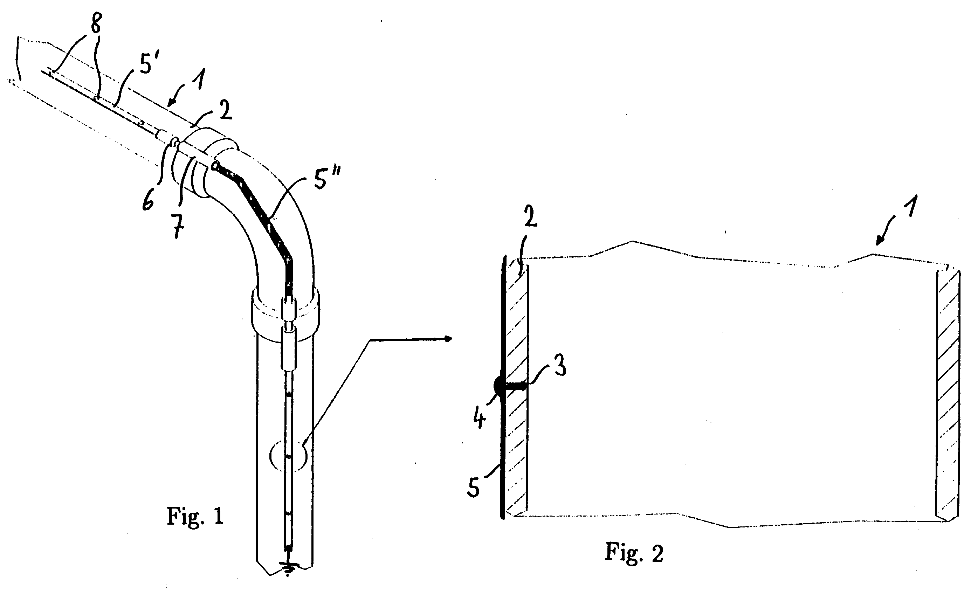

Das Prinzip der Erfindung soll zunächst an Hand von Figur 2 veranschaulicht werden. Diese zeigt einen Längsschnitt durch ein Rohr 1 aus einem elektrisch isolierenden Material, vorzugsweise Kunststoff. Die Wandung 2 des Rohrs 1 weist entlang der Längsrichtung des Rohrs 1 in regelmäßigen Abständen Durchgangsbohrungen 3 auf, welche, verglichen mit dem Durchmesser des Rohrs 1, klein sind. In diesen Bohrungen 3 sind Stifte 4 aus einem leitfähigen Material, vorzugsweise Metall, angeordnet; welche im wesentlichen die Form einer Niete haben. Die Stifte 4 sind so von außen in die Bohrungen 3 eingeschoben, daß ihr Kopf, dessen Durchmesser größer ist als der Durchmesser der Bohrung 3, außen verbleibt. Zwischen dem Kopf jedes Stifts 4 und der äußeren Oberfläche der Wandung 2 des Rohrs 1 befindet sich ein metallischer Erdungsleiter 5, der durch Berührung mit dem Kopf des Stifts 4 mit diesem in elektrisch leitfähiger Verbindung steht. Der Erdungsleiter 5 ist beispielsweise als oder Flachbandmetall oder als Drahtlitze mit Bohrungen zur Aufnahme der Stifte 4 ausgeführt.

Vorzugsweise haben die Stifte 4 neben ihrer weiter unten zu erläuternden Funktion der Entionisierung auch die Funktion, den Erdungsleiter 5 an der Wandung 2 des Rohrs 1 zu fixieren. Hierzu sind die Stifte 4 beispielsweise als Klemmstifte oder Schrauben ausgebildet.

Figur 1 zeigt ein Rohrsystem aus zwei geraden Rohren und einem, diese geraden Rohre verbindenden Winkelstück. An allen Rohrstücken ist der Erdungsleiter 5, wie oben beschrieben, als Breitbandgeflechtkabel ausgeführt Die zeichnerisch dargestellten Bohrungen 8 sind in einem solchen Breitbandgeflechtkabel nicht vorhanden, sondern werden erst beim Eindrehen der Stifte 4 erzeugt. In der Zeichnung dienen sie nur der Veranschaulichung der Orte, an welchen Bohrungen sitzen. Falls, beispielsweise bei Verwendung eines Flachbandmetalls, feste Bohrungen 8 vorgesehen sind, so weisen diese zueinander einen Abstand auf, der dem Abstand benachbarter Bohrungen 3 in der Wandung 2 des Rohrs 1 entspricht. In diesem Fall empfiehlt es sich, wenigstens an den gekrümmten Rohrstücken, im dargestellten Beispiel handelt es sich um eine 90°- Krümmung, den Erdungsleiter 5'' als Litze oder Breitbandgeflechtkabel auszuführen, damit er der Krümmung des Rohrstücks besser folgen kann.

Im Bereich der Enden der einzelnen Rohrstücke weisen die Erdungsleiter 5' bzw. 5'' jeweils eine Steckverbindung 6 bzw. 7 zum Einstecken der benachbarten Steckverbindung 7 bzw. des Erdungsleiter des benachbarten Rohrstücks aus. Im dargestellten Beispiel sind diese Steckverbindungen als Stifte 6 auf der einen Seite und Kupplungen 7 auf der anderen Seite ausgeführt, wobei ein Stift 6 in eine Kupplung 7 eingreift. An einer beliebigen Stelle, bei langen Rohrverbindungen auch an mehreren Stellen. ist der so aus einzelnen Stücken zusammengesetzte Erdungsleiter 5 geerdet, was in Figur 1 durch das Erde-Symbol angedeutet ist.

Die Vorrichtung funktioniert wie folgt.

Tritt durch ein Rohrsystem, wie es ausschnittsweise in Figur 1 dargestellt ist, ein Fluid, beispielsweise ein Gas, mit hoher Geschwindigkeit, so bilden sich durch die Reibung des Gases an der Innenseite des Rohrs 1 Ionen. Diese können sich aber nicht auf der Innenseite des Rohrs 1 ansammeln und, wenn die Ladung hoch genug ist, zu Entladungen durch Funkenüberschläge führen, sondern sie werden über die bis fast in den Innenraum des Rohrs 1 reichenden Stifte und den mit diesen Stiften 4 in Kontakt stehenden Erdungsleiter 5 zur Erde abgeführt. Funkenentladungen werden auf diese Weise vermieden.

In einer alternativen Ausführungsform kann der durch die abgeführten Ionen erzeugte elektrische Strom sogar wieder nutzbringend verwertet werden. Beispielsweise kann er in das Stromnetz zurückgeführt oder zur Aufladung eines Akkumulators benutzt werden.

In einer weiteren alternativen Ausführungsform, welche insbesondere für flüssigkeitstransportierende Rohrsysteme geeignet ist, sind die Bohrungen 3 in der Wandung 2 des Rohrs 1 nicht als Durchgangsbohrungen, sondern von außen her, als Sackbohrungen ausgebildet, wobei zwischen dem Ende der Bohrungen 3 und dem Innenraum des Rohrs 1 ein geringer Teil der Wandstärke 2 des Rohrs verbleibt. Auf diese Weise kann keine Flüssigkeit durch die Bohrungen 3 austreten und der Abstransport der Ionen durch die Stifte 4 bleibt gewährleistet. Der geringe verbleibende Teil der Wandstärke 2 des Rohrs 1 wirkt lediglich als Dielektrikum. Diese Ausführungsform kann auch beim Transport von giftigen Gasen verwendet werden, deren Austritt durch die Bohrungen 3 verhindert werden muß.

## Patentansprüche

1. Vorrichtung zur Entionisierung eines fluidtransportierenden Rohrs (1) aus elektrisch isolierendem Material, **gekennzeichnet durch** leitfähige Stifte (4), welche in Bohrungen (3) in der Wandung (2) des Rohrs (1) angeordnet und über einen Erdungsleiter (5) geerdet sind.

2. Vorrichtung nach Anspruch 1, **dadurch gekennzeichnet**, daß das Rohr (1) ein Kunststoffrohr ist und der Erdungsleiter (5) außerhalb des Rohrs (1) verläuft.

3. Vorrichtung nach einem der voranstehenden Ansprüche, **dadurch gekennzeichnet**, daß die Bohrungen (3) Durchgangsbohrungen sind.

4. Vorrichtung nach einem der voranstehenden Ansprüche, **dadurch gekennzeichnet**, daß die Stifte (4) unter Einklemmung des flach ausgebildeten Erdungsleiters (5) von außen in die Bohrungen (3) der Wandung (2) eingeführt sind.

5. Vorrichtung nach einem der voranstehenden Ansprüche; **dadurch gekennzeichnet**, daß die Stifte (4) Nieten bzw. Schrauben sind.

6. Vorrichtung nach einem der voranstehenden Ansprüche, **dadurch gekennzeichnet**, daß der Erdungsleiter als Breitbandgeflechtkabel (5, 5', 5oeoøoeoø) ausgeführt ist.

7. Vorrichtung nach einem der voranstehenden Ansprüche, **dadurch gekennzeichnet**, daß der Erdungsleiter als Flachbandmetall oder als Litze ausgeführt ist.

8. Vorrichtung nach einem der voranstehenden Ansprüche, **dadurch gekennzeichnet**, daß der mit dem Rohr (1) verlaufende Erdungsleiter (5) im Bereich der Rohrenden jeweils eine Steckverbindung (6, 7) zum Einstecken der benachbarten Steckverbindung (7, 6) des Erdungsleiters (5) des benachbarten Rohrstücks (1) aufweist.

9. Vorrichtung nach einem der voranstehenden Ansprüche, **dadurch gekennzeichnet**, daß die Bohrungen (3) von außen in die Wandung (2) des Rohrs (1) eingebrachte Sackbohrungen sind und ein geringer Teil der Wandstärke (2) des Rohrs (1) im Bereich der Bohrungen (3) verbleibt.

10. Rohr aus elektrisch isolierendem Material zum Aufbau eines fluidtransportierenden Rohrsystems, **dadurch gekennzeichnet**, daß entlang der Außenseite der Wandung (2) des Rohrs (1) ein Erdungsleiter (5) verläuft, durch welchen Stifte (4) unter Einklemmung des Erdungsleiters (5) in Bohrungen (3) der Wandung (2) des Rohrs (1) eingreifen.

11. Rohr nach Anspruch 10, **dadurch gekennzeichnet**, daß der Erdungsleiter (5) an beiden Enden Steckverbindungen (6,7) zur elektrischen Anbindung der Erdungsleiter benachbarter Rohre aufweist.

12. Rohr nach einem der Ansprüche 10 oder 11, **dadurch gekennzeichnet**, daß der Erdungsleiter als Breitbandgeflechtkabel (5, 5oeoø, 5'') ausgebildet ist.

13. Rohr nach einem der Ansprüche 10 oder 11, **dadurch gekennzeichnet**, daß der Erdungsleiter als flaches Metallband oder als flexible Litze ausgebildet ist.
